# EUROPEAN PATENT SPECIFICATION

(11) **EP 2 712 472 B1**
(45) Date of publication and mention of the grant of the patent: **16.12.2015**
(21) Application number: 12709389.6
(22) Date of filing: 24.02.2012
(51) Int. Cl.: H02G 13/00, F03D 11/00

(54) **WIND TURBINE BLADE FOR A WIND TURBINE**
WINDTURBINENSCHAUFEL FÜR EINE WINDTURBINE
PALE DE TURBINE ÉOLIENNE POUR UNE TURBINE ÉOLIENNE

(30) Priority: 09.12.2011 JP 2011006902; 09.12.2011 WO PCT/JP2011/078602
(43) Date of publication of application: 02.04.2014
(73) Proprietor: Mitsubishi Heavy Industries, Ltd., Tokyo 108-8215 (JP); MHI Vestas Offshore Wind A/S, 8200 Aarhus N (DK)
(72) Inventor: FUJIOKA, Hideyasu, Tokyo 108-8215 (JP); SHIBATA, Masaaki, Tokyo 108-8215 (JP); CREMER, Andreas, London Greater London W1K 6WL (GB)
(74) Representative: RGTH
(86) International application number: PCT/JP2012/001310
(87) International publication number: WO 2013/084370

(56) References cited:
- EP-A2- 2 267 280
- WO-A2-2008/101506

## Description

### [Technical Field]

The invention relates to a wind turbine blade for a wind turbine, wherein the wind turbine blade comprises a lightning protection system.

### [Background Art]

Wind turbines are highly exposed to lightning strikes owing to their configuration, height and location. In particular, the wind turbine blades as the component of the wind turbine comprising weakly conductive material and representing the most distant point from the ground's surface have the highest risk of being struck by a lightning. In the case of a lightning strike to the wind turbine blade a very high current propagates through the wind turbine causing severe and very costly damages, especially concerning the wind turbines blades.

For the above reasons, protective measures in the form of reliable and high performance lightning protection systems are needed for wind turbines. Generally, in a conventional system, a lightning protection system comprises several point-like lightning receptors located at the surface of the blade and a further down conduction system to the root of the blade, usually in the form of down conducting cables.

EP 2 122 162 A2 discloses a lightning protection system for a wind turbine blade comprising a down conduction system in the form of a metallic mesh, a very small receptor and an electrical conductor running inside of the blade. The purpose of the electrical conductor is to separate the metallic mesh and the receptor so that the receptor is electrically isolated.

EP 2 267 280 A2 discloses a lightning protection system for a wind turbine blade or aircraft wing which includes a glass-reinforced fiber or carbon-reinforced wind turbine blade or aircraft wing having a tip region, a suction side, a pressure side, a leading edge and a trailing edge.

In WO 2008/101506 A2 a wind turbine rotor blade comprising a blade tip and a lightning protection system is disclosed wherein the blade includes at least one metallic lightning receptor at the surface of the blade in proximity of the distal end of the blade tip.

Even though it has been known in the above described prior art to provide wind turbines with relatively small receptors and to spread the current to several down conductors in the form of a metallic mesh the above described lightning protection system does not guarantee a sufficiently safe and reliable protection against lightning since it is possible that the lightning does not strike the relatively small receptive area for lightning strikes and since the components of the lightning protection system do not provide a broad and highly conductive cross section of conduction.

### [Summary of Invention]

### [Technical Problem]

It is the object of the present invention to provide an improved wind turbine blade with a lightning protection system. A further object of the invention is to provide a wind turbine blade with a lightning protection system which provides an improved protection and an enhanced conduction. Another object of the invention is to reduce the occurrence of lightning strikes which do not strike into receptors of the lightning protection system.

According to the present invention the wind turbine blade has a tip end, a tip end area and a root end area. The tip end is the most distant point of the blade from a hub of a nacelle at which the blade is typically mounted. The tip end area is hence an area at the tip end of the blade whose dimensions are small compared to the complete length of the blade, whereas the root end area is an area at the opposite side of the blade.

To prevent the blade from being damaged by lightning strikes, the wind turbine blade has a lightning protection system comprising at least one metal foil, wherein a first end of the metal foil is disposed in the tip end area of the blade and wherein the metal foil extends from said first end towards the root end area of the blade.

The term "metal foil" refers to a piece of metal whose thickness is significantly smaller than its longitudinal and transverse dimensions. The metal foil according to the present invention consists of one integral piece of metal.

According to the invention, the metal foil has a first end which is disposed in the tip end area of the blade. The metal foil extends from this first end towards the root end of the blade. The metal foil can extend all the way from the first end to the root end of the blade or only for a part of the blade length. Preferably, the metal foil is connected to a further down conduction system of the lightning protection system in the root end area. Due to this arrangement of the metal foil, the metal foil can function as a down conductor.

In addition, the metal foil is located in proximity, preferably in close proximity, to the outer surface of the blade so that it can directly function as a lightning receptor. In particular, the metal foil is preferably located in the radial outer 10% of the blade wall with respect to the blade wall thickness.

According to the invention, the lightning protection system further comprises a first metallic lightning receptor which is disposed between the first end of the metal foil and the tip end of the blade and wherein part of the first metallic lightning receptor is arranged overlapping with the metal foil so that an overlap section between the metal foil and the first metallic lightning receptor is formed. The first metallic lightning receptor can be arranged anywhere between the first end of the metal foil and the tip end of the blade. The first metallic lightning receptor is also considered to be arranged between the first end of the metal foil and the tip end of the blade if the first metallic lightning receptor is only partly arranged between the first end of the metal foil and the tip end of the blade while another part of the first metallic lightning receptor is arranged outside of the specified distance.

Furthermore, the first metallic lightning receptor is in direct electrical contact with the metal foil. This direct electrical contact can be achieved by an adjoining arrangement of only the first end of the metal foil and an end of the first metallic lightning receptor. In order to provide a larger contact area, the first metallic lightning receptor and the metal foil overlap. Preferably, the blade comprises a plurality of foils. In this case, the first metallic lightning receptor is considered to be in direct electrical contact with a metal foil, even if another metal foil is disposed between the first metallic lightning receptor and the metal foil.

The first metallic lightning receptor is arranged in proximity to the outer surface of the blade, preferably in close proximity, so that the first metallic lightning receptor can directly function as a lightning receptor. In particular, the first metallic lightning receptor is preferably located in the radial outer 10% of the blade with respect to the blade wall thickness.

By providing a lightning protection system according to the present invention a higher acquisition rate of lightning strikes without consequential damages to the wind turbine blade can be achieved by means of providing a larger receptive area. Apart from an enhanced receptive function of the lightning protection system, the invention results in better down conducting properties.

In a preferred embodiment, the metal foil comprises a plurality of apertures, which in particular all have the same aperture size. The size of the apertures is preferably sufficiently small so that the possibility of a lightning strike to the blade through an aperture instead of a strike to the metal foil can be ruled out. Preferably, the size of the apertures amounts between 0.5 mm and 3 mm, especially preferred between 1 mm and 2 mm, so that foils with a fine net structure can be used. The aperture size is defined as the largest possible distance between two opposing aperture sides. In a particular preferred embodiment, the size of the apertures amounts to less than 10 mm, preferably less than 5 mm and particularly preferably less than 2 mm.

Further preferred, the apertures are arranged within the metal foil in such a way that a net structure of the metal foil is defined. The metal foil therefore comprises webs of continuous metal foil running in two preferential directions. In contrast to a lightning protection mesh as it is known in prior art, the metal foil does not consist of separate conductors which are woven in order to form a meshwork. Preferably, the apertures are arranged in such a way that a regular net structure of the metal foil is formed.

In a further embodiment, the net structure of the metal foil is oriented in a diagonal way to the longitudinal direction of the blade. The term diagonal is to be understood that both preferential directions of the net structure enclose an angle with the longitudinal direction of the blade which is between 0° and 90°, preferably between 20° and 80° and especially preferably between 50° and 70°. In this way, the foil does not experience the full strain of the blade which, is mostly stressed along its longitudinal direction. Therefore, the stress and the correlated fatigue load acting on the net structure of the metal foil will be much lower using the above described diagonal orientation.

The metal foil can, for instance, be produced by deep drawing or rolling of one piece of metal. Preferably, the metal foil is produced by the steps of slotting, drawing and rolling of the metal foil. Alternatively, it is also possible to punch a plurality of holes to an already rolled metal foil. In both ways, the metal foil consists of one continuous piece of metal. In particular, the metal foil is non-woven and not a woven mesh of single wires of fibers. The advantage of using a non-woven metal foil is an improved conductivity and less cost compared to woven metal meshes, since no weaving process is necessary.

Preferably, the metal foil is formed as a strip which is arranged substantially parallel to the longitudinal direction of the blade. In a further preferred embodiment of the invention, the metal foil has a constant width.

Preferably, the lightning protection system of the wind turbine blade comprises a plurality of metal foils. The lightning protection system preferably consists of one metal foil located along the suction side of the blade and one metal foil located along the pressure side of the blade. In a particularly preferred embodiment, the lightning protection system comprises two metal foils on the suction side and the pressure side of the blade respectively.

A certain percentage of the area of the apertures compared to the total area of the metal foil should not be exceeded as the down conduction requires a minimal cross section of conducting material.

Preferably, the wind turbine blade comprises at least one spar cap extending from the tip end area of the blade to the root end area of the blade, said at least one spar cap preferably extending substantially parallel to the longitudinal direction of the blade. The spar cap preferably comprises carbon fibers which as a conductive material are prone to a lightning strike. In order to protect the spar cap from a direct lightning strike, the metal foil is disposed outside from the spar cap and in radial direction behind the spar cap. Preferably, the metal foil is disposed outside from the spar cap and in radial direction behind the spar cap along the entire length of the spar cap so that a lightning strike to the spar cap can successfully be prevented. By radial direction "thickness direction" is meant, which corresponds to a transverse direction or cross direction of a section of the blade wall wherein the opposite blade wall section is not included. In particular, the thickness direction is substantially perpendicular to a center line of the blade wall section.

According to another embodiment of the invention, the wind turbine blade comprises a plurality of metal foils which are electrically connected amongst each other to avoid a potential difference and therefore an arc-over between the metal foils, preferably by means of metal foil sections connecting the plurality of metal foils with each other.

In a further preferred embodiment of the invention, the first metallic lightning receptor is flat-shaped or bar-shaped. The term "flat-shaped" refers to the feature that the thickness of the first metallic lightning receptor is significantly smaller than its longitudinal and transverse dimensions. In the case of a "bar-shaped" first metallic lightning receptor, both, the thickness dimension as well as the transverse dimension, are significantly smaller than the longitudinal dimension of the first metallic lightning receptor and have preferably the same order of magnitude.

In another preferred embodiment of the invention, the blade comprises an outer blade layer representing the outermost layer of the blade. The outer blade layer can preferably be a glass laminate layer or only a thin protective layer such as a thin glass fleece layer. Preferably, the metal foil is only covered by the outer blade layer in the outer radial direction of the blade. Furthermore, the first metallic lightning receptor preferably is also covered only by the outer blade layer in the radial outer direction of the blade. By this arrangement, the first metallic lightning receptor can function as a direct receptor of a stroke of lightning. The metal foil and the first metallic lightning receptor are therefore protected from environmental influences, such a corrosion, physical damage, such as gas. At the same time, the protective layer is sufficiently thin so that the first metallic lightning receptor and the metal foil can still function as direct lightning receptors.

Preferably, the shape of the first metallic lightning receptor is adapted to the shape of the outer blade layer, especially preferably, the first metallic lightning receptor clings to the inside of the outer blade layer. In an especially preferable embodiment, the first metallic lightning receptor adjoins the inside of the outer blade layer along a substantial part of its length and width.

In a further embodiment, the first metallic lightning receptor comprises a metallic plate. The metallic plate is defined by a piece of material which is substantially defined by two opposite sides, wherein these sides run preferably parallel to each other and wherein the sides are extended in comparison to the distance between the sides. Preferably, the metallic plate has a constant thickness.

In a further embodiment of the invention, the first metallic lightning receptor tapers towards the tip end of the blade. In other words, the width of the first metallic lightning receptor in circumferential direction of the blade decreases in direction towards the tip end of the blade so that the width of the metallic lightning receptor at the first end of the metal foil is larger than the width of the metallic lightning receptor at a location towards the tip end of the blade. Preferably, the first metallic lightning receptor tapers continuously towards the tip end of the blade and especially preferably at a constant rate.

According to a further embodiment of the invention, the first metallic lightning receptor extends over substantially the entire blade surface in the tip end area. In particular, the first metallic lightning receptor extends over the entire blade surface in the blade tip end area. Preferably, the first metallic lightning receptor extends over the entire inner blade surface in the tip end area. Especially preferably, the blade comprises an outer blade layer whose inner side in the tip end area of the blade is completely covered by the first metallic lightning receptor wherein the metallic lightning receptor is arranged adjoining the inner surface of the outer blade surface. Due to this arrangement of the first metallic lightning receptor, a large receptive area is created as well as a large cross section of conduction.

In a further preferred embodiment, the first metallic lightning receptor comprises a solid metallic member. Preferably, the solid metallic member occupies a substantial part of the volume, preferably the entire volume, inside the blade in its tip end area. This inside volume is defined by the outer blade surface in the tip end area.

According to another embodiment of the invention, the first metallic lightning receptor extends continuously from the first end of the metal foil to the blade tip. Preferably, the first metallic lightning receptor has a first end from which it extends towards the blade tip. This first end of the first metallic lightning receptor can be disposed between the first end of the metal foil and the blade tip end including the case in which the first end of the first metallic lightning receptor is disposed directly at the first end of the metal foil. Alternatively, the first end of the first metallic lightning receptor can also be disposed beyond the first end of the metal foil towards the root end of the blade. Preferably, the first metallic lightning receptor extends continuously from its first end towards the blade tip, especially preferably all the way to the blade tip. "Continuously" signifies that there is no interruption of the first metallic lightning receptor from the first end towards its opposite end. In the case of the first metallic lightning receptor continuously extending all the way to the blade tip, the first metallic lightning receptor is disposed along the entire distance between its first end and the blade tip end.

According to the invention, the first metallic lightning receptor is arranged overlapping with the metal foil. This is especially the case, when the first end of the first metallic lightning receptor is disposed beyond the first end of the metal foil so that between the first end of the metal foil and the first end of the metallic lightning receptor an overlap section is defined. Preferably, the first metallic lightning receptor and the metal foil are arranged adjoining in this overlap section so that a direct electrical contact is achieved.

According to another preferred embodiment, the first metallic lightning receptor and the metal foil are clamped between two metal plates in the overlap section. In another preferred embodiment, the lightning protection system comprises at least one disk receptor wherein the disk receptor is disposed in proximity to the first end of the metal foil. Preferably, said disk receptor is disposed in the overlap section of the first metallic lightning receptor and the metal foil. In this case, one of the metal plates between which the first metallic lightning receptor and the metal foil are clamped can preferably be a base plate of the disk receptor. The other metal plate could be a counter metal plate for achieving a clamping connection between the first metallic lightning receptor and the metal foil.

In a further embodiment, the first metallic lightning receptor and the metal foil are connected by means of clamping, caulking or by means of a bonding agent. "Connected" signifies that the first metallic lightning receptor and the metal foil are attached to each other by means of clamping, caulking or by means of a bonding agent.

In another embodiment of the invention, the first metallic lightning receptor, preferably the material of the first metallic lightning receptor, comprises copper. Preferably, the first metallic lightning receptor is entirely made of copper. Alternatively, other metals with a high conductivity can be used.

In a further preferred embodiment, the lightning protection system comprises a second metallic lightning receptor which is disposed at the tip end of the blade and which is in direct electrical contact with the first metallic lightning receptor. Disposed at the tip end signifies that the second metallic lightning receptor provides a receptive area at the tip end of the blade so that a lightning can directly strike into the tip end of the blade. Preferably, the second metallic lightning receptor is covered only by the outer blade layer, being especially preferably only a protective layer, in the radial outer direction of the blade.

The direct electrical contact between the first metallic lightning receptor and the second metallic lightning receptor is preferably achieved by an adjoining arrangement, preferably in an overlap section between the second metallic lightning receptor and the first metallic lightning receptor, providing a large area of direct electrical contact. Alternatively, the second metallic lightning receptor and the first metallic lightning receptor can abut at their respective ends resulting in a smaller direct electrical contact area.

In another preferred embodiment, the second metallic lightning receptor comprises a rod receptor. Preferably, the outer layer of the blade provides an opening for the tip of the rod receptor through which the tip of the rod receptor extends to the outside of the blade. Hence, a lightning can directly strike into the tip of the rod receptor without damaging the outer blade layer. In a preferred embodiment, the rod receptor comprises a base plate, wherein the base plate is located inside the blade. Furthermore, the second metallic lightning receptor can preferably comprise at least one disk receptor wherein the disk receptor is preferably mounted on the same base plate as the rod receptor. Preferably, the base plate is arranged between the first end of the metal foil and the tip end of the blade. The disk receptor being mounted on the base plate protrudes slightly to the outside of the blade. Preferably, two disk receptors are mounted on the base plate of the rod receptor, the disk receptors being electrically and mechanically connected by connection means, in particular by a metal bolt.

According to a further embodiment of the invention, the second metallic lightning receptor comprises a solid metallic blade tip. Preferably, the solid metallic blade tip comprises connection means for connecting to the first metallic lightning receptor. Preferably, the connection means are configured as connection webs, which are preferably metal plates extending towards the root end of the blade. By providing connection means, a larger contact area between the first metallic lightning receptor and the second metallic lightning receptor can be achieved.

In a further preferred embodiment, the first metallic lightning receptor is connected to the second metallic lightning receptor by means of clamping, caulking or by means of a bonding agent.

In a further embodiment of the invention, the second metallic lightning receptor or the metal foil comprise copper. Preferably, the second metallic lightning receptor or the metal foil are entirely made of copper. Instead of using copper, other metals with a high conductivity can also be used.

### [Brief Description of Drawings]

The invention will be described below with reference to the following figures which show in schematic representation
[Fig. 1]

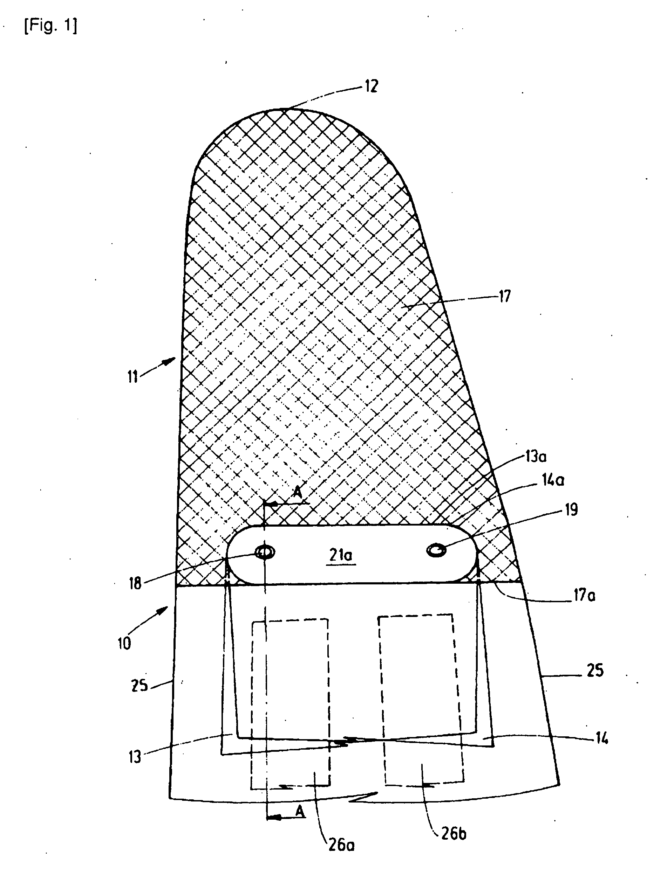

   Figure 1 is a top view of a section of a wind turbine blade with a lightning protection system;
[Fig. 2]

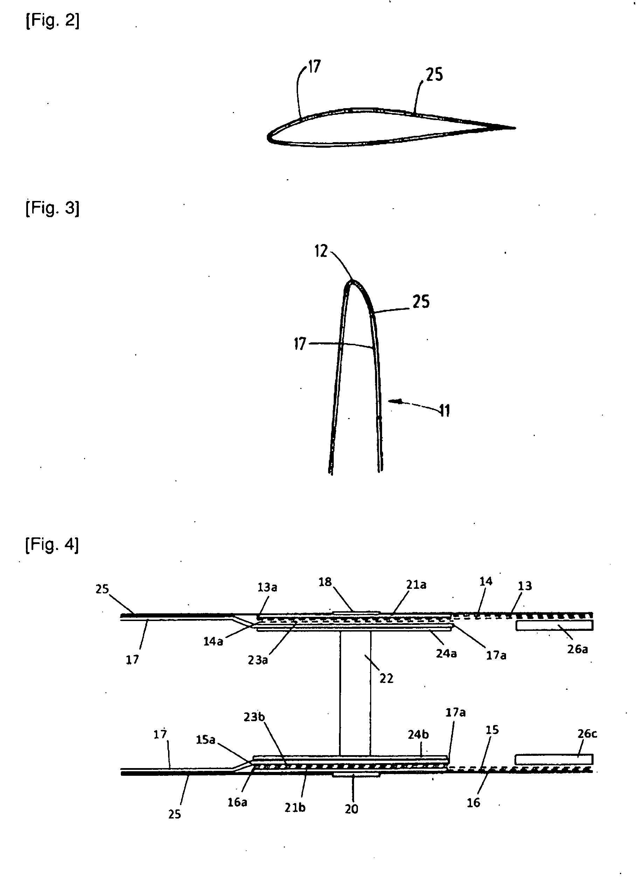

   Figure 2 is a cross sectional view of the section of the blade of figure 1 in its tip end area;
[Fig. 3]
   Figure 3 is a longitudinal sectional view of the section of the blade of figure 1 in its tip end area;
[Fig. 4]
   Figure 4 is a longitudinal sectional view of the section of the blade of figure 1 along the cutting line A-A;
[Fig. 5]

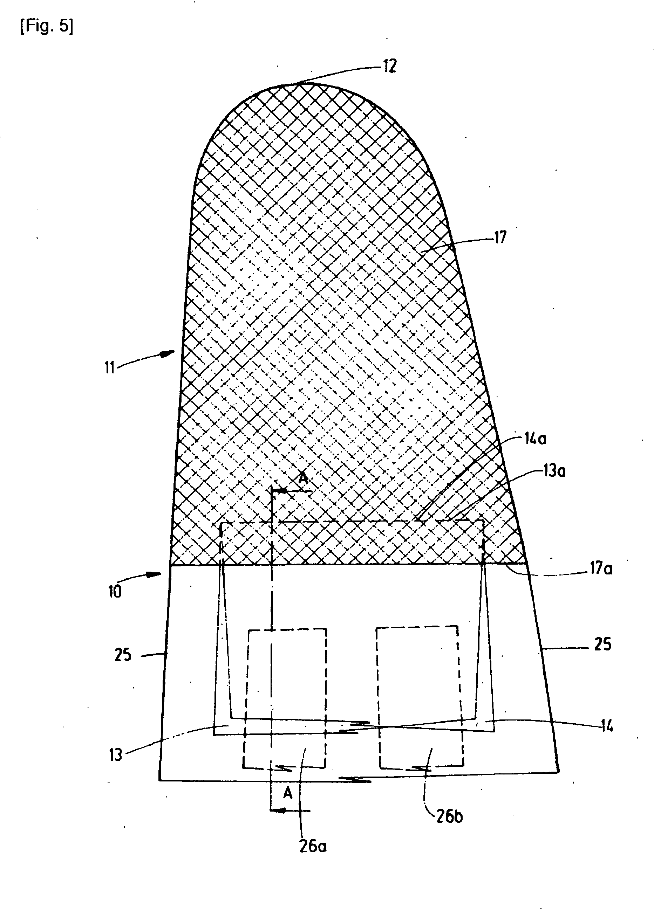

   Figure 5 is a top view of a section of a wind turbine blade with a lightning protection system;
[Fig. 6]

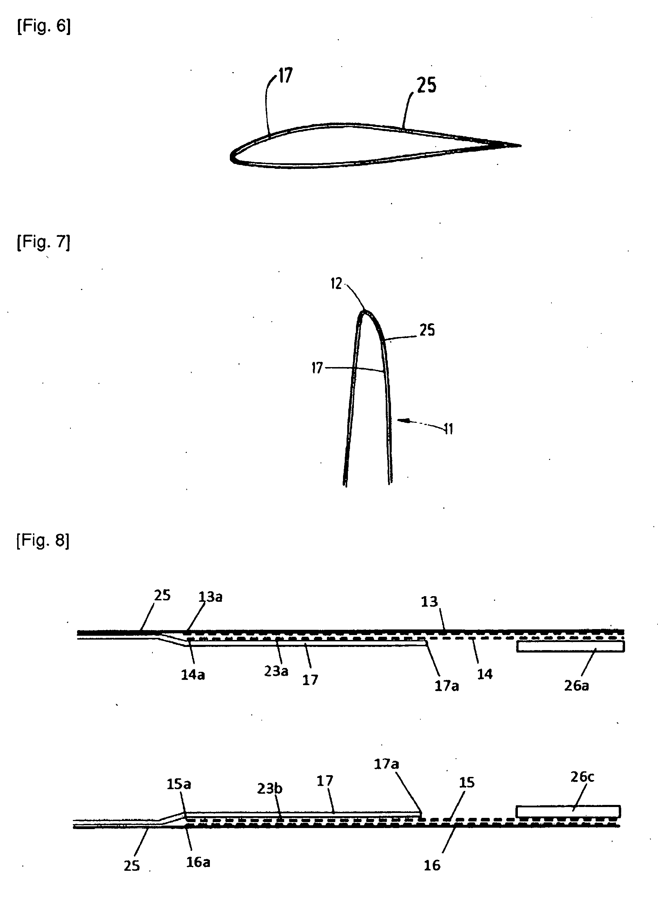

   Figure 6 is a cross sectional view of the section of the blade of figure 5 in its tip end area;
[Fig. 7]
   Figure 7 is a longitudinal sectional view of the section of the blade of figure 5 in its tip end area;
[Fig. 8]
   Figure 8 is a longitudinal sectional view of the section of the blade of figure 5 along the cutting line A-A;
[Fig. 9]

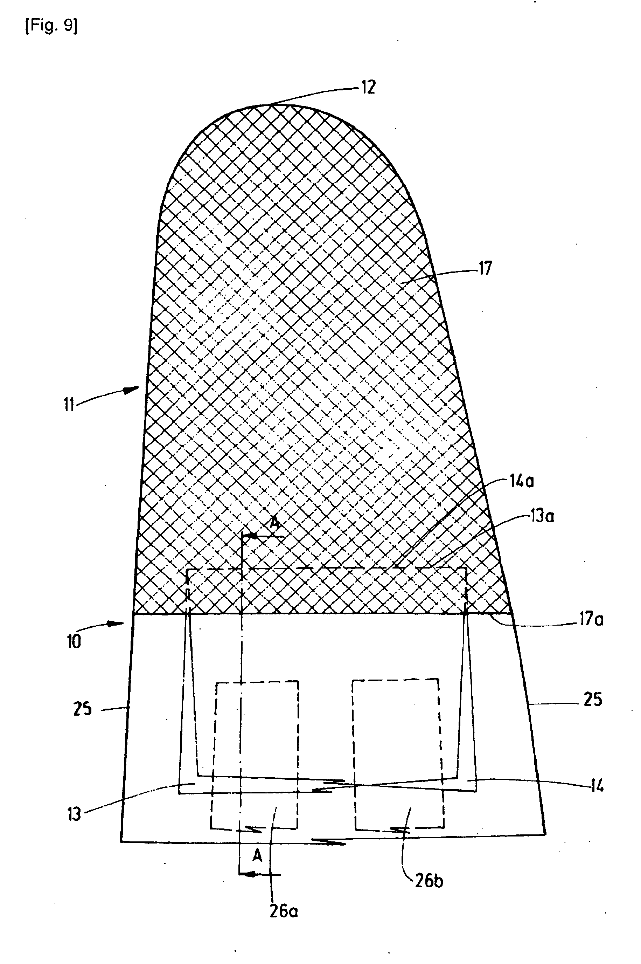

   Figure 9 is a top view of a section of a wind turbine blade with a lightning protection system;
[Fig. 10]

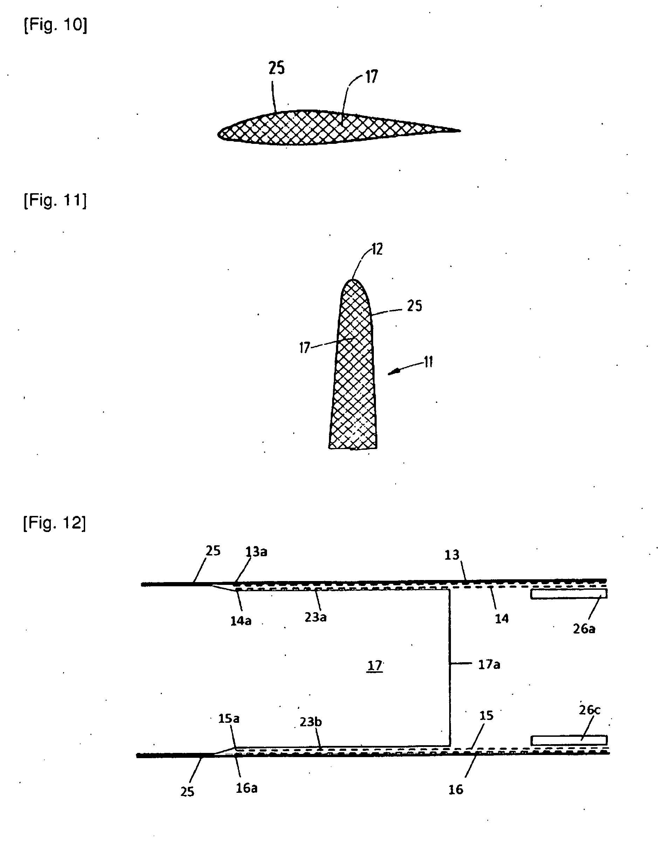

   Figure 10 is a cross sectional view of the section of the blade of figure 9 in its tip end area;
[Fig. 11]
   Figure 11 is a longitudinal sectional view of the section of the blade of figure 9 in its tip end area;
[Fig. 12]
   Figure 12 is a longitudinal sectional view of the section of the blade of figure 9 along the cutting line A-A;
[Fig. 13]

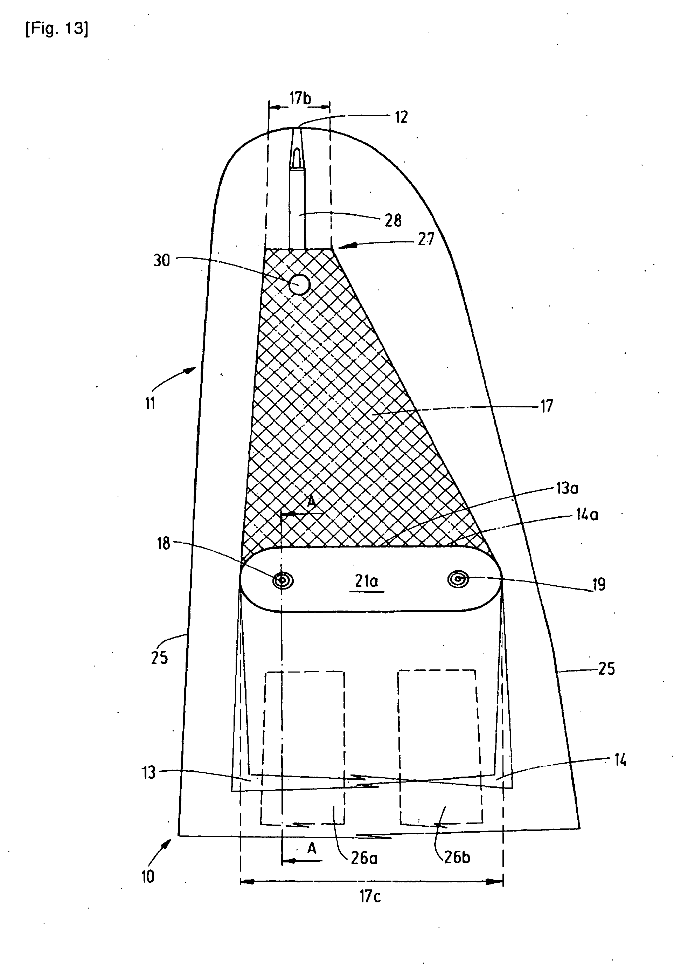

   Figure 13 is a top view of a section of a wind turbine blade with a lightning protection system;
[Fig. 14]

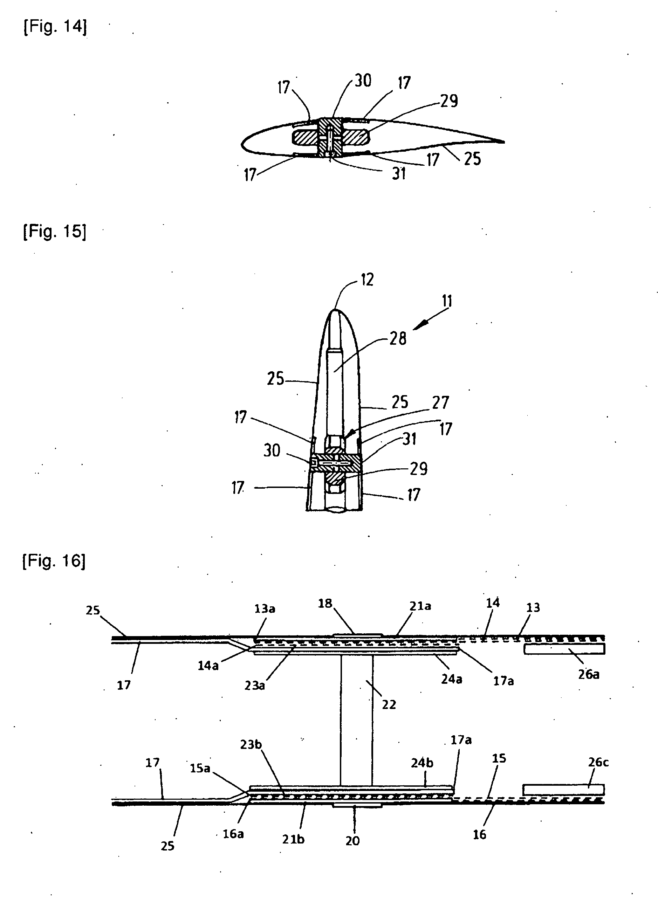

   Figure 14 is a cross sectional view of the section of the blade of figure 13 in its tip end area;
[Fig. 15]
   Figure 15 is a longitudinal sectional view of the section of the blade of figure 13 in its tip end area;
[Fig. 16]
   Figure 16 is a longitudinal sectional view of the section of the blade of figure 13 along the cutting line A-A;
[Fig. 17]

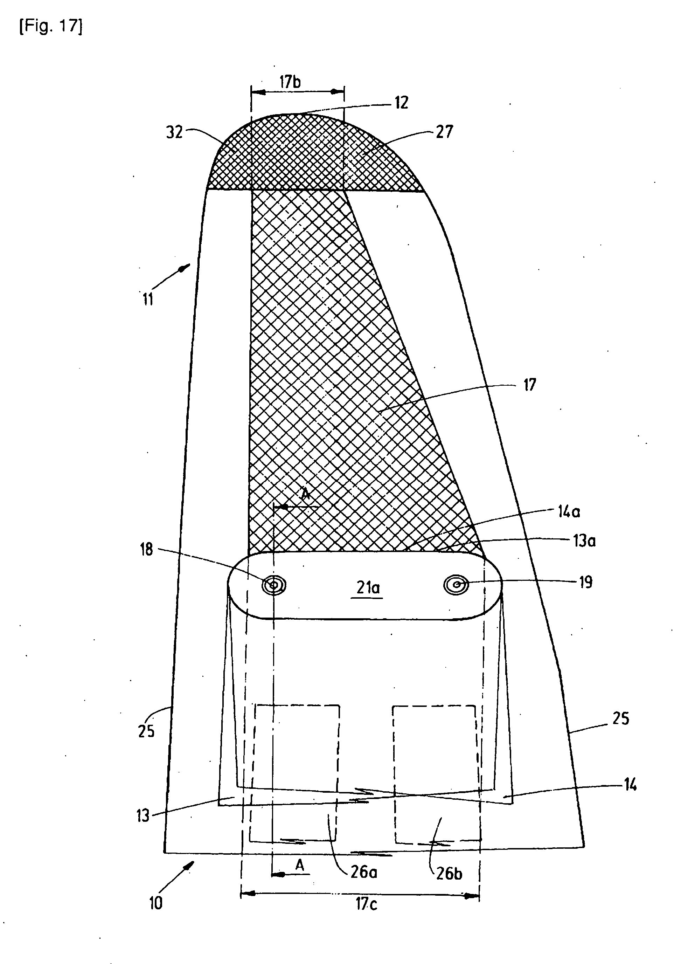

   Figure 17 is a top view of a section of a wind turbine blade with a lightning protection system;
[Fig. 18]

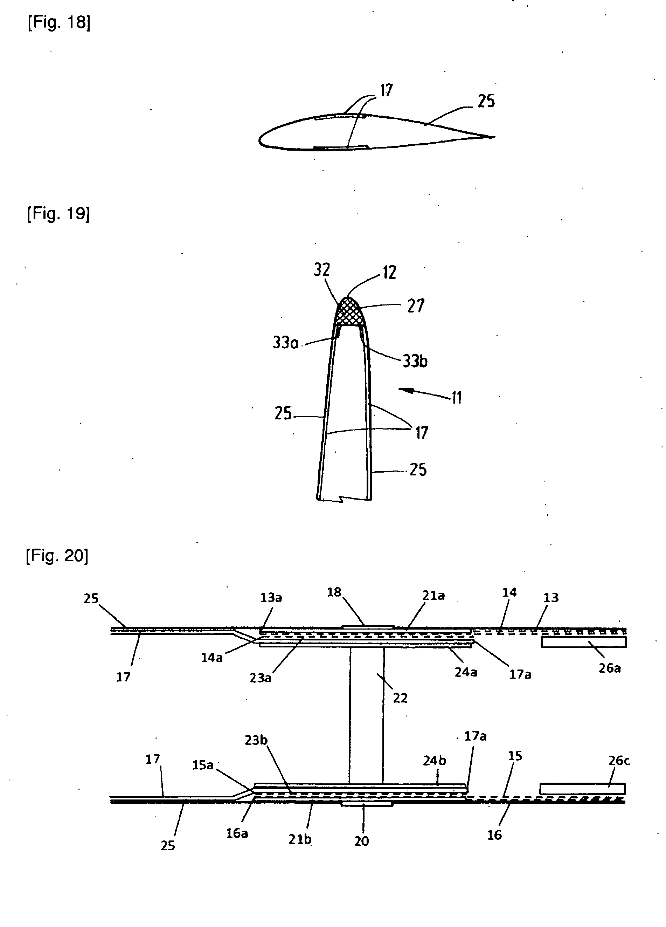

   Figure 18 is a cross sectional view of the section of the blade of figure 17 in its tip end area;
[Fig. 19]
   Figure 19 is a longitudinal sectional view of the section of the blade of figure 17 in its tip end area; and
[Fig. 20]
   Figure 20 is a longitudinal sectional view of the section of the blade of figure 17 along the cutting line A-A.

### [Description of Embodiments]

Figure 1 shows a top view of a section of a wind turbine blade 10 comprising a tip end area 11 and a tip end 12, wherein the tip end 12 is disposed in the tip end area 11. The wind turbine blade 10 further has a lightning protection system comprising two metal foils 13, 14 formed as strips out of copper which both have a first end 13a, 14a disposed in the tip end area 11 of the blade 10. The metal foils 13, 14 extend from their first ends 13a, 14a along the longitudinal direction of the blade 10 towards its root end.

The blade 10 further comprises an outer blade layer 25 (see figures 2 and 3) of which in figure 1 only the outline is shown. The metal foils 13, 14 are arranged in radial direction behind spar caps 26a, 26b which are located underneath the outer blade layer 25. Since the spar caps 26a, 26b are disposed underneath the outer blade layer and the metal foils 13, 14, the spar caps 26a, 26b are shown by broken lines. The spar caps 26a, 26b extend from the root end of the blade 10 towards the tip end 12 of the blade along a substantial part of the length of the blade. However, the spar caps 26a, 26b are not disposed at the tip end area 11 of the blade 10.

The metal foils 13, 14 are arranged substantially parallel to the longitudinal direction of the blade 10. For the section of the blade 10 shown in figure 1 the metal foils 13, 14 overlap with each other. When extending towards the root end of the blade 10 the metal foils increasingly diverge from each other until they are not arranged overlapping anymore for the substantial part of the length of the blade 10.

The lightning protection system further comprises a first metallic lightning receptor 17. The first metallic lightning receptor 17 being a metallic plate out of copper is disposed between the first ends 13a, 14a of the metal foils 13, 14 and the tip end 12 of the blade 10. The first metallic lightning receptor 17 extends continuously from a first end 17a to the blade tip end 12 of the blade 10. The first end 17a of the first metallic lightning receptor 17 is arranged towards the root end of the blade 10 as seen from the first ends 13a, 14a of the metal foils 13, 14. The first metallic lightning receptor 17 extends over the entire blade surface in the tip end area 11 of the blade 10.

The lightning protection system further comprises two disk receptor pairs of which two disk receptors 18, 19 are shown in figure 1. The disk receptors 18, 19 are disposed in proximity to the first ends 13a, 14a of the metal foils 13, 14. The disk receptors 18, 19 comprise a base plate 21a which is disposed in outer radial direction behind the first metallic lightning receptor 17. The disk receptors 18, 19 are embedded inside the blade 10 and are mounted on the base plate 21a. The disk receptors 18, 19 protrude out of the outer blade layer 25 to the outside of the blade 10. The metal foils 13, 14 have approximately the same width as the base plate 21a.

Figure 2 shows a cross sectional view of the section of the blade of figure 1 in its tip end area 11. The outer blade layer 25 representing the outermost layer of the blade 10 is shown by a thick line. The outer blade layer 25 covering the first metallic lightning receptor is only a thin protective layer. The first metallic lightning receptor 17 extends over the entire blade surface in the blade tip end area 11 adapting to the shape of the blade surface. The first metallic lightning receptor 17 is arranged adjoining the inside of the outer blade layer 25 in the blade tip end area 11 except for overlap sections 23a, 23b (see figure 4) with the metal foils 13, 14. Since only the outer blade layer 25 separates the first metallic lightning receptor 17 from the outside of the blade 10 in radial outer direction, the receptive properties of the first metallic lightning receptor 17 are only slightly decreased and the first metallic lightning receptor 17 can function as a direct lightning receptor.

The adjoining arrangement can also be seen in figure 3 which shows a longitudinal sectional view of the section of the blade 10 of figure 1 in its tip end 12. The first metallic lightning receptor 17 extends all the way to the tip end 12 of the blade 10.

Figure 4 shows a longitudinal sectional view of the section of the blade 10 of figure 1 along the cutting line A-A. On the other side of the blade 10 which is not shown in figure 1 two more metal foils 15, 16 are arranged so that the entire blade 10 comprises two metal foils on each side and therefore four metal foils 13, 14, 15, 16 are shown by broken lines in figure 4. Furthermore, the blade 10 comprises four spar caps of which two spar caps 26a, 26c, one on each side of the blade 10, are shown in figure 4. On both sides the metal foils 13, 14, 15, 16 extend from their first ends 13a, 14a, 15a, 16a disposed in the tip end area 11 of the blade 10 towards the root end area of the blade 10. For the length of the spar caps 26a, 26c the metal foils 13, 14, 15, 16 are disposed in radial direction behind the spar caps 26a, 26c and therefore between the spar caps 26a, 26c and the radial outer blade layer 25 which can only be a thin protective layer.

In figure 4 two disk receptors 18, 20 of the two disk receptor pairs are shown which are mounted on a base plate 21a, 21b respectively. The disk receptors 18, 20 being disposed on opposite sides of the blade 10 are connected by a bolt 22 serving as an attachment as well as an electrical connection. The two metal foils of each side 13, 14 and 15, 16 are arranged at the inside of one of the base plate 21a, 21b respectively. Therefore, the metal foils 13, 14 are arranged overlapping with the base plate 21a, and the metal foils 15, 16 are arranged overlapping with base plate 21b.

The first metallic lightning receptor 17 extending over the entire surface of the blade 10 in its tip end area 11 has a first end 17a at each side of the blade 10. At the one side of the blade 10, the first metallic lightning receptor 17 is arranged at the inside of the metal foils 13, 14 whereas at the opposing side the first metallic lightning receptor 17 is arranged at the inside of the metal foils 15, 16. Even though between the metal foil 13, 16 and the first metallic lightning receptor 17 another metal foil 14, 15 is disposed, the first metallic lightning receptor and the metal foils 14, 15 are nonetheless considered to be in direct electrical contact. In this way, overlap sections 23a, 23b between the first metallic lightning receptor 17 and at least one of the metal foils 13, 14, 15, 16 are created. This results in a very large direct electrical contact area between the first metallic lightning receptor 17 and at least one of the metal foils 13, 14, 15, 16 on each side. For connection purposes there is another metal plate 24a, 24b on each side of the blade 10 which clamps the first metallic lightning receptor 17 and the metal foils 13, 14, 15, 16 in their overlap section 23a, 23b. Therefore, the first metallic lightning receptor 17 is arranged between the base plates 21a, 21b and the metal plates 24a, 24b in the overlap section 23a, 23b. Outside of the overlap section 23a, 23b the first metallic lightning receptor 17 is disposed at the inside of the outer blade layer 25. The metal plates 23a, 23b, the base plates 21a, 21b, the metal foils 13, 14, 15, 16 and the first metallic lightning receptor 17 are made out of copper.

Figure 5 shows a top view of a section of another wind turbine blade 10 with a tip end 12, a tip end area 11 and a lightning protection system. The metal foils 13, 14, the outer blade layer 25 and the spar caps 26a, 26b are arranged in the same way as in figure 1.

The first metallic lightning receptor 17 in figure 5 is a metallic plate being disposed between the first ends 13a, 14a of the metal foils 13, 14 and the tip end 12 of the blade 10 and extending continuously from a first end 17a to the blade tip 12 of the blade 10. Furthermore, the first metallic lightning receptor 17 extends over the entire blade surface in the tip end area 11. The first end 17a of the first metallic lightning receptor 17 is arranged between the first end 13a, 14a of the metal foils 13, 14 and the root end of the blade 10 but in proximity to the first ends 13a, 14a of the metal foils 13, 14.

In figure 6 a cross sectional view of the section of the blade of figure 5 in its tip end area 11 is shown. The first metallic lightning receptor 17 and the outer blade layer 25 are arranged in the same way as in figure 2.

Figure 7 shows a longitudinal sectional view of the section of the blade 10 of figure 5 in its tip end area 11. The first metallic lightning receptor 17 and the outer blade layer 25 are arranged in the same way as in figure 3.

Figure 8 shows a longitudinal sectional view of the section of the blade 10 of figure 5 along the cutting line A-A. The arrangement of the outer blade layer 25 and the spar caps 26a, 26b is the same as in figure 4. The metal foils 13, 14, 15, 16 are disposed at the inside of the outer blade layer 25 along their complete length. The first metallic lightning receptor 17 extends from the blade tip 12 beyond the first ends 13a, 14a, 15a, 16a of the metal foils 13, 14, 15, 16 towards the root end of the blade 10 until its first end 17a. The first metallic lightning receptor 17 is arranged at the inside of the outer blade layer 25 at the tip end area 11 of the blade except for overlap sections 23a, 23b at which the first metallic lightning receptor 17 is arranged adjoining the inside of at least one of the metal foils 13, 14, 15, 16 on each blade side. The first metallic lightning receptor 17 and the metal foils 13, 14, 15, 16 are connected by means of a bonding agent.

Figure 9 shows a top view of a section of another wind turbine blade 10 with a tip end 12, a tip end area 11 and a lightning protection system. The first metallic lightning receptor 17, metal foils 13, 14, the outer blade layer 25 and the spar caps 26a, 26b are arranged in the same way as in figure 5. The only difference is that in figure 9 the first metallic lightning receptor 17 is a solid metallic member out of copper. Since the first metallic lightning receptor 17 is solid the entire volume inside of the blade 10 in its tip end area 11 is occupied with the first metallic lightning receptor 17.

In figure 10 a cross sectional view of the section of the blade of figure 9 in its tip end area 11 is shown. The first metallic lightning receptor 17 adapts to the shape of the blade surface being arranged adjoining the inside of the outer blade layer 25 in the tip end area 11 of the blade 10 except for overlap sections 23a, 23b with the metal foils 13, 14, 15, 16 (see figure 12).

Figure 11 shows a longitudinal sectional view of the section of the blade 10 of figure 9 in its tip end area 11. The first metallic lightning receptor 17 extends to the tip end 12 of the blade 10 occupying the entire volume inside of the blade 10 in its tip end area 11.

Figure 12 shows a longitudinal sectional view of the section of the blade 10 of figure 9 along the cutting line A-A. The arrangement of the outer blade layer 25 and the spar caps 26a, 26b is the same as in figure 4. The metal foils 13, 14, 15, 16 are disposed at the inside of the outer blade layer 25 along their complete length. The first metallic lightning receptor 17 extends from the blade tip 12 beyond the first ends 13a, 14a, 15a, 16a of the metal foils 13, 14, 15, 16 towards the root end of the blade 10 until its first end 17a. The first metallic lightning receptor 17 is arranged at the inside of the outer blade layer 25 at the tip end area 11 of the blade except for overlap sections 23a, 23b at which the first metallic lightning receptor 17 is arranged adjoining the inside of at least one of the metal foils 13, 14, 15, 16 on each blade side. The first metallic lightning receptor 17 and the metal foils 13, 14, 15, 16 are connected by means of a bonding agent.

In figure 13 a top view of a section of another wind turbine blade 10 with a tip end 12, a tip end area 11 and a lightning protection system is shown. The metal foils 13, 14, the outer blade layer 25 and the spar caps 26a, 26b are arranged in the same way as in figure 1. The first metallic lightning receptor 17 in figure 13 is a metallic plate out of copper being disposed between the first ends 13a, 14a of the metal foils 13, 14 and the tip end 12 of the blade 10.

The lightning protection system further comprises a second metallic lightning receptor 27 at the tip end 12 of the blade 10. The second metallic lightning receptor 27 comprises a rod receptor 28 which is mounted on a base plate 29 inside of the blade 10 (see figures 14, 15 and 16). The first metallic lightning receptor 17 extends continuously from a first end 17a (see figure 16) to the second metallic lightning receptor 27. Starting from its first end 17a towards the second metallic lightning receptor 27 the width of the first metallic lightning receptor 17 tapers so that its width 17b at the second metallic lightning receptor 27 is smaller than its width 17c at its first end 17a.

The second metallic lightning receptor 27 further comprises two disk receptors 30, 31 being mounted on the base plate 29 of the rod receptor 28 of which one disk receptor 30 protruding through the first metallic lightning receptor 17 and the outer blade layer 25 can be seen in figure 13. The first metallic lightning receptor 17 extends beyond the base plate 29 (see figures 14, 15 and 16) of the second metallic lightning receptor 27 but does not extend all the way to the tip end 12 of the blade 10.

In figure 14 a cross sectional view of the section of the blade 10 of figure 13 in its tip end area 11 is shown. Apart from the rod receptor 28 the two disk receptors 30, 31 are mounted on the base plate 29 of the rod receptor 28. The first metallic lightning receptor 17 adapts to the shape of the blade surface. The first metallic lightning receptor 17 is in direct electrical contact with the disk receptors 30, 31 and therefore in direct electrical contact with the second metallic lightning receptor 27.

Figure 15 shows a longitudinal sectional view of the section of the blade 10 of figure 13 in its tip end area 11. The first metallic lightning receptor 17 extends beyond the base plate 29 of the rod receptor 28 but not all the way to the tip end 12 of the blade 10. The rod receptor 28 protrudes through the outer blade layer 25 at the tip end 12 of the blade 10.

Figure 16 shows a longitudinal sectional view of the section of the blade 10 of figure 13 along the cutting line A-A. The arrangement of the first metallic lightning receptor 17, the metal foils 13, 14, 15, 16, the spar caps 26a, 26b and the outer blade layer 25 is the same as in figure 4.

Figure 17 shows a top view of a section of another wind turbine blade 10 with a tip end 12, a tip end area 11 and a lightning protection system. The metal foils 13, 14 and the spar caps 26a, 26b are arranged in the same way as in figure 1.

The first metallic lightning receptor 17 in the form of a metallic plate extends continuously and in a tapering way from its first end 17a to a second metallic lightning receptor 27. The width 17b of the first metallic lightning receptor 17 at the second metallic lightning receptor 27 is smaller than its width 17b at its first end 17a. The second metallic lightning receptor 27 comprises a solid metal blade tip 32. At the radial outside of the solid metal blade tip 32, there may be an outer blade layer 25 in form of a protective coating or no outer blade layer at all.

In figure 18 a cross sectional view of the section of the blade of figure 17 in its tip end area 11 is shown. The first metallic lightning receptor 17 adapts to the shape of the blade surface and is arranged at the inside of the outer blade layer 25 along its complete width.

In Figure 19 a longitudinal sectional view of the section of the blade 10 of figure 17 in its tip end area 11 is shown. The first metallic lightning receptor 17 is in direct electrical contact to the second metallic lightning receptor 27 in the form of the solid metallic blade tip 32 by means of connections means in the form of connection webs 33a, 33b.

Figure 20 shows a longitudinal sectional view of the section of the blade 10 of figure 17 along the cutting line A-A. The arrangement of the first metallic lightning receptor 17, the metal foils 13, 14, 15, 16, the spar caps 26a, 26b and the outer blade layer 25 is the same as in figure 4.

## Claims

1. A wind turbine blade (10) for a wind turbine, having
a tip end area (11), a root end area, a tip end (12), and a lightning protection system,
wherein said tip end (12) is disposed in the tip end area (11), and
said lightning protection system comprising at least one metal foil (13, 14, 15, 16),
wherein a first end (13a, 14a , 15a, 16a) of the metal foil (13, 14, 15, 16) is disposed in the tip end area (11) of the blade (10),
wherein the metal foil (13, 14, 15, 16) extends from said first end (13a, 14a , 15a, 16a) towards the root end area of the blade (10), and
wherein the metal foil (13, 14, 15, 16) is arranged in proximity to the outer surface of the blade (10), so that the metal foil (13, 14, 15, 16) is adapted to function as a receptor of a stroke of lightning and as a down conductor,
said lightning protection system further comprising a first metallic lightning receptor (17),
wherein the first metallic lightning receptor (17) is disposed between the first end (13a, 14a, 15a, 16a) of the metal foil (13, 14, 15, 16) and the tip end (12) of the blade (10),
wherein the first metallic lightning receptor (17) is in direct electrical contact with the metal foil (13, 14, 15, 16),
wherein the first metallic lightning receptor (17) is arranged in proximity to the outer surface of the blade (10), **characterised in that**
part of the first metallic lightning receptor (17) is arranged overlapping with the metal foil (13, 14, 15, 16), so that an overlap section (23a, 23b) between the metal foil (13, 14, 15, 16) and the first metallic lightning receptor (17) is formed.

2. The wind turbine blade (10) according to claim 1,
wherein the first metallic lightning receptor (17) is flat-shaped or bar-shaped.

3. The wind turbine blade (10) according to claim 1,
wherein the first metallic lightning receptor (17) comprises a metallic plate.

4. The wind turbine blade according to claim 1, wherein the first metallic lightning receptor (17) tapers towards the tip end (12) of the blade (10).

5. The wind turbine blade (10) according to claim 1,
wherein the first metallic lightning receptor (17) extends over substantially the entire blade surface in the tip end area (11).

6. The wind turbine blade (10) according to claim 1,
wherein the first metallic lightning receptor (17) comprises a solid metallic member.

7. The wind turbine blade (10) according to claim 1,
wherein the first metallic lightning receptor (17) extends continuously from the first end (13a, 14a, 15a, 16a) of the metal foil (13, 14, 15, 16) to the blade tip end (12).

8. The wind turbine blade (10) according to claim 1,
wherein the metal foil (13, 14, 15, 16) is disposed outside from a spar cap (26a, 26b) of the wind turbine blade (10) and in radial direction behind the spar cap (26a, 26b) along the entire length of the spar cap (26a, 26b).

9. The wind turbine blade (10) according to claim 1,
wherein the first metallic lightning receptor (17) and the metal foil (13, 14, 15, 16) are clamped between two metal plates (21a, 21b, 24a, 24b) in the overlap section (23a, 23b).

10. The wind turbine blade (10) according to claim 1,
wherein the first metallic lightning receptor (17) and the metal foil (13, 14, 15, 16) are connected by means of clamping, caulking or by means of a bonding agent.

11. The wind turbine blade (10) according to claim 1,
wherein the lightning protection system comprises at least one disk receptor (18, 19, 20, 30, 31),
said disk receptor (18, 19, 20, 30, 31) being disposed in proximity to the first end (13a, 14a, 15a, 16a) of the metal foil (13, 14, 15, 16).

12. The wind turbine blade (10) according to claim 1,
wherein the first metallic lightning receptor (17) comprises copper.

13. The wind turbine blade (10) according to claim 1,
wherein the first metallic lightning receptor (17) is covered only by a thin protective layer (25) in the radial outer direction of the blade (10).

14. The wind turbine blade (10) according to claim 1,
wherein the lightning protection system comprises a second metallic lightning receptor (27),
wherein said second metallic lightning receptor (27) is disposed at the tip end (12) of the blade (10), and
wherein said second metallic lightning receptor (27) is in direct electrical contact with the first metallic lightning receptor (17).

15. The wind turbine blade (10) according to claim 14,
wherein the second metallic lightning receptor (27) comprises a rod receptor (28).

16. The wind turbine blade (10) according to claim 15,
wherein the rod receptor (28) comprises a base plate (29),
wherein said base plate (29) is located inside the blade(10), and
wherein at least one disk receptor (30, 31) is mounted on the base plate (29).

17. The wind turbine blade (10) according to claim 14,
wherein the second metallic lightning receptor (27) comprises a solid metallic blade tip (32).

18. The wind turbine blade (10) according to claim 17,
wherein the solid metallic blade tip (32) comprises connection means (33a, 33b) for connecting to the first metallic lightning receptor (17).

19. The wind turbine blade (10) according to claim 14,
wherein the first metallic lightning receptor (17) is connected to the second metallic lightning receptor (27) by means of clamping, caulking or by means of a bonding agent.

20. The wind turbine blade (10) according to claim 14,
wherein the second metallic lightning receptor (27) comprises copper.

## Patentansprüche

1. Ein Windturbinenblatt (10) für eine Windenergieanlage, die einen Bereich eines Spitzen-Endes (11), einen Bereich eines Wurzelendes, ein Spitzen-Ende (12) und ein Blitzschutzsystem aufweist,
wobei das Spitzen-Ende (12) im Bereich des Spitzen-Endes angeordnet ist und
wobei das Blitzschutzsystem zumindest eine Metallfolie (13, 14, 15, 16) umfasst,
wobei ein erstes Ende (13a, 14a, 15a, 16a) der Metallfolie (13, 14, 15, 16) in dem Bereich des Spitzen-Endes (11) des Turbinenblattes (10) angeordnet ist,
wobei sich die Metallfolie (13, 14, 15, 16) von dem ersten Ende (13a, 14a, 15a, 16a) in Richtung des Bereichs des Fußendes des Turbinenblattes (10) erstreckt, und
wobei die Metallfolie (13, 14, 15, 16) in der Nähe der Außenfläche des Turbinenblattes (10) angeordnet ist, so dass die Metallfolie (13, 14, 15, 16) ausgebildet ist, um als Rezeptor eines Blitzschlags und als Ableiter zu fungieren,
wobei das Blitzschutzsystem ferner einen ersten metallischen Blitzrezeptor (17) umfasst,
wobei der erste metallische Blitzrezeptor (17) zwischen dem ersten Ende (13a, 14a, 15a, 16a) der Metallfolie (13, 14, 15, 16) und dem Spitzen-Ende (12) des Turbinenblattes (10) angeordnet ist,
wobei der erste metallische Blitzrezeptor (17) in direktem elektrischen Kontakt mit der Metallfolie (13, 14, 15, 16) ist,
wobei der erste metallische Blitzrezeptor (17) in der Nähe der Außenfläche des Turbinenblattes (10) angeordnet ist,
**dadurch gekennzeichnet, dass**
ein Teil des ersten metallischen Blitzrezeptors (17) überlappend mit der Metallfolie (13, 14, 15, 16) angeordnet ist, so dass ein Überlappungsbereich (23a, 23b) zwischen der Metallfolie (13, 14, 15, 16) und dem ersten metallischen Blitzrezeptor (17) gebildet wird.

2. Das Windturbinenblatt (10) gemäß Anspruch 1, wobei der erste metallische Blitzrezeptor (17) flach oder stabförmig ausgebildet ist.

3. Das Windturbinenblatt (10) gemäß Anspruch 1, wobei der erste metallische Blitzrezeptor (17) eine metallische Platte umfasst.

4. Das Windturbinenblatt gemäß Anspruch 1, wobei der erste metallische Blitzrezeptor (17) sich zum Spitzen-Ende des Turbinenblattes hin verjüngt.

5. Das Windturbinenblatt (10) gemäß Anspruch 1, wobei der erste metallische Blitzrezeptor (17) sich im Wesentlichen über die gesamte Blattoberfläche in dem Bereich des Spitzen-Endes erstreckt.

6. Das Windturbinenblatt (10) gemäß Anspruch 1, wobei der erste metallische Blitzrezeptor (17) ein festes metallisches Element umfasst.

7. Das Windturbinenblatt (10) gemäß Anspruch 1, wobei sich der erste metallische Blitzrezeptor (17) kontinuierlich von dem ersten Ende (13a, 14a, 15a, 16a) der Metallfolie (13, 14, 15, 16) bis zum Spitzen-Ende (12) des Turbinenblattes erstreckt.

8. Das Windturbinenblatt (10) gemäß Anspruch 1, wobei die Metallfolie (13, 14, 15, 16) außerhalb eines Holmgurtes (26a, 26b) des Windturbinenblattes (10) und in radialer Richtung hinter dem Holmgurt (26a, 26b) entlang der gesamten Länge des Holmgurtes (26a, 26b) angeordnet ist.

9. Das Windturbinenblatt (10) gemäß Anspruch 1, wobei der erste metallische Blitzrezeptor (17) und die Metallfolie (13, 14, 15, 16) zwischen zwei Metallplatten (21a, 21b, 24a, 24b) im Überlappungsbereich (23a, 23b) gespannt sind.

10. Das Windturbinenblatt (10) gemäß Anspruch 1, wobei der erste metallische Blitzrezeptor (17) und die Metallfolie (13, 14, 15, 16) mittels Spannen, Verstemmen oder mittels eines Bindemittels verbunden sind.

11. Das Windturbinenblatt (10) gemäß Anspruch 1, wobei das Blitzschutzsystem wenigstens einen Scheibenrezeptor (18, 19 ,20, 30, 31) umfasst, wobei der Scheibenrezeptor (18, 19 ,20, 30, 31) in der Nähe des ersten Endes (13a, 14a, 15a, 16a) der Metallfolie (13, 14, 15, 16) angeordnet ist.

12. Das Windturbinenblatt (10) gemäß Anspruch 1, wobei der erste metallische Blitzrezeptor (17) Kupfer umfasst.

13. Das Windturbinenblatt (10) gemäß Anspruch 1, wobei der erste metallische Blitzrezeptor (17) nur durch eine dünne Schutzschicht (25) in der radialen Außenrichtung des Turbinenblatts (10) bedeckt ist

14. Das Windturbinenblatt (10) gemäß Anspruch 1, wobei das Blitzschutzsystem einen zweiten metallischen Blitzrezeptor (27) umfasst, wobei der zweite metallische Blitzrezeptor (27) an dem Spitzen-Ende (12) des Turbinenblatts (10) angeordnet ist, und wobei der zweite metallische Blitzrezeptor (27) in direktem elektrischen Kontakt mit dem ersten metallischen Blitzrezeptor (17) steht

15. Das Windturbinenblatt (10) gemäß Anspruch 14, wobei der zweite metallische Blitzrezeptor (27) einen Stabrezeptor (28) umfasst.

16. Das Windturbinenblatt (10) gemäß Anspruch 15, wobei der Stabrezeptor (28) eine Bodenplatte (29) umfasst, wobei sich die Bodenplatte (29) innerhalb des Turbinenblatts (10) befindet, und wobei mindestens ein Scheibenrezeptor (30, 31) auf der Bodenplatte (29) montiert ist.

17. Das Windturbinenblatt (10) gemäß Anspruch 14, wobei der zweite metallische Blitzrezeptor (27) eine feste metallische Blattspitze (32) umfasst.

18. Das Windturbinenblatt (10) gemäß Anspruch 17, wobei die feste metallische Blattspitze (32) Verbindungsmittel (33a, 33b) zum Verbinden mit dem ersten metallischen Blitzrezeptor (17) umfasst.

19. Das Windturbinenblatt (10) gemäß Anspruch 14, wobei der erste metallische Blitzrezeptor (17) mit dem zweiten metallischen Blitzrezeptor (27) mittels Klemmen, Verstemmen oder mittels eines Bindemittels verbunden ist.

20. Das Windturbinenblatt (10) gemäß Anspruch 14 wobei der zweite metallische Blitzrezeptor (27) Kupfer umfasst.

## Revendications

1. Pale de turbine éolienne (10) pour une turbine éolienne, comprenant une zone d'extrémité de pointe (11), une zone d'extrémité d'embase, une extrémité de pointe (12), et un système de protection contre la foudre, ladite extrémité de pointe (12) étant disposée dans la zone d'extrémité de pointe (11) et ledit système de protection contre la foudre comprenant au moins une feuille métallique (13, 14, 15, 16), une première extrémité (13a, 14a, 15a, 16a) de la feuille métallique (13, 14, 15, 16) étant disposée dans la zone d'extrémité de pointe (11) de la pale (10), la feuille métallique (13, 14, 15, 16) s'étendant depuis ladite première extrémité (13a, 14a, 15a, 16a) vers la zone d'extrémité d'embase de la pale (10), et la feuille métallique (13, 14, 15, 16) étant disposée à proximité de la surface extérieure de la pale (10) de telle sorte que la feuille métallique (13, 14, 15, 16) soit apte à fonctionner comme récepteur d'éclair et comme conducteur de descente, ledit système de protection contre la foudre comprenant en outre un premier récepteur de foudre métallique (17), le premier récepteur de foudre métallique (17) étant disposé entre la première extrémité (13a, 14a, 15a, 16a) de la feuille métallique (13, 14, 15, 16) et l'extrémité de pointe (12) de la pale (10), le premier récepteur de foudre métallique (17) étant en contact électrique direct avec la feuille métallique (13, 14, 15, 16), le premier récepteur de foudre métallique (17) étant disposé à proximité de la surface extérieure de la pale (10), **caractérisée en ce qu'**une partie du premier récepteur de foudre métallique (17) est disposée de manière à chevaucher la feuille métallique (13, 14, 15, 16), de telle sorte qu'une section de chevauchement (23a, 23b) entre la feuille métallique (13, 14, 15, 16) et le premier récepteur de foudre métallique (17) soit formée.

2. Pale de turbine éolienne (10) selon la revendication 1, dans laquelle le premier récepteur de foudre métallique (17) a une forme plate ou est en forme de barre.

3. Pale de turbine éolienne (10) selon la revendication 1, dans laquelle le premier récepteur de foudre métallique (17) comprend une plaque métallique.

4. Pale de turbine éolienne selon la revendication 1, dans laquelle le premier récepteur de foudre métallique (17) est effilé en direction de l'extrémité de pointe (12) de la pale (10).

5. Pale de turbine éolienne (10) selon la revendication 1, dans laquelle le premier récepteur de foudre métallique (17) s'étend substantiellement sur toute la surface de la pale dans la zone d'extrémité de pointe (11).

6. Pale de turbine éolienne (10) selon la revendication 1, dans laquelle le premier récepteur de foudre métallique (17) comprend un organe métallique massif.

7. Pale de turbine éolienne (10) selon la revendication 1, dans laquelle le premier récepteur de foudre métallique (17) s'étend de manière continue depuis la première extrémité (13a, 14a, 15a, 16a) de la feuille métallique (13, 14, 15, 16) jusqu'à l'extrémité de pointe (12) de la pale.

8. Pale de turbine éolienne (10) selon la revendication 1, dans laquelle la feuille métallique (13, 14, 15, 16) est disposée à l'extérieur d'un embout (26a, 26b) de la pale de turbine éolienne (10) et dans une direction radiale derrière l'embout (26a, 26b) le long de toute la longueur de l'embout (26a, 26b).

9. Pale de turbine éolienne (10) selon la revendication 1, dans laquelle le premier récepteur de foudre métallique (17) et la feuille métallique (13, 14, 15, 16) sont serrés entre deux plaques métalliques (21a, 21b, 24a, 24b) dans la section de chevauchement (23a, 23b).

10. Pale de turbine éolienne (10) selon la revendication 1, dans laquelle le premier récepteur de foudre métallique (17) et la feuille métallique (13, 14, 15, 16) sont connectés par serrage, par calfeutrage ou au moyen d'un agent de liaison.

11. Pale de turbine éolienne (10) selon la revendication 1, dans laquelle le système de protection contre la foudre comprend au moins un récepteur en forme de disque (18, 19, 20, 30, 31), ledit récepteur en forme de disque (18, 19, 20, 30, 31) étant disposé à proximité de la première extrémité (13a, 14a, 15a, 16a) de la feuille métallique (13, 14, 15, 16).

12. Pale de turbine éolienne (10) selon la revendication 1, dans laquelle le premier récepteur de foudre métallique (17) comprend du cuivre.

13. Pale de turbine éolienne (10) selon la revendication 1, dans laquelle le premier récepteur de foudre métallique (17) est couvert uniquement par une mince couche de protection (25) dans la direction radiale extérieure de la pale (10).

14. Pale de turbine éolienne (10) selon la revendication 1, dans laquelle le système de protection contre la foudre comprend un deuxième récepteur de foudre métallique (27), ledit deuxième récepteur de foudre métallique (27) étant disposé à l'extrémité de pointe (12) de la pale (10), et ledit deuxième récepteur de foudre métallique (27) étant en contact électrique direct avec le premier récepteur de foudre métallique (17).

15. Pale de turbine éolienne (10) selon la revendication 14, dans laquelle le deuxième récepteur de foudre métallique (27) comprend un récepteur en forme de tige (28).

16. Pale de turbine éolienne (10) selon la revendication 15, dans laquelle le récepteur en forme de tige (28) comprend une plaque de base (29), ladite plaque de base (29) étant située à l'intérieur de la pale (10), et au moins un récepteur en forme de disque (30, 31) étant monté sur la plaque de base (29).

17. Pale de turbine éolienne (10) selon la revendication 14, dans laquelle le deuxième récepteur de foudre métallique (27) comprend une pointe de pale métallique massive (32).

18. Pale de turbine éolienne (10) selon la revendication 17, dans laquelle la pointe de pale métallique massive (32) comprend des moyens de connexion (33a, 33b) pour la connexion au premier récepteur de foudre métallique (17).

19. Pale de turbine éolienne selon la revendication 14, dans laquelle le premier récepteur de foudre métallique (17) est connecté au deuxième récepteur de foudre métallique (27) par serrage, par calfeutrage ou au moyen d'un agent de liaison.

20. Pale de turbine éolienne (10) selon la revendication 14, dans laquelle le deuxième récepteur de foudre métallique (27) comprend du cuivre.
